# FASCICULE DE BREVET EUROPEEN

(11) **EP 4 391 574 B1**
(45) Date de publication et mention de la délivrance du brevet: **15.10.2025**
(21) Numéro de dépôt: 23218367.3
(22) Date de dépôt: 19.12.2023
(51) Int. Cl.: H04N 25/707, H04N 25/42, H04N 25/77, H04N 25/76, H04N 25/47

(54) **DETECTION DE PULSE LASER ASYNCHRONE ET IMAGERIE PASSIVE**
ASYNCHRONE LASERIMPULSDETEKTION UND PASSIVE BILDGEBUNG
ASYNCHRONOUS LASER PULSE DETECTION AND PASSIVE IMAGING

(30) Priorité: 20.12.2022 FR 2213919
(43) Date de publication de la demande: 26.06.2024
(73) Titulaire: Commissariat à l'Energie Atomique et aux Energies Alternatives, 75015 Paris (FR)
(72) Inventeur: NICOLAS, Jean-Alain, 38054 GRENOBLE CEDEX 09 (FR)
(74) Mandataire: Brevalex

(56) Documents cités:
- FR-A1- 2 915 833
- US-A1- 2016 295 146
- US-A1- 2017 207 262
- US-A1- 2019 113 605

## Description

### DOMAINE TECHNIQUE

La présente demande est relative au domaine des capteurs d'images permettant, outre de réaliser une capture d'image d'une scène, de mettre en œuvre une détection simultanée d'impulsions lumineuses.

### ÉTAT DE LA TECHNIQUE ANTÉRIEURE

Le document US9215386B2 présente un détecteur multifonctions qui permet d'intégrer plusieurs modes de fonctionnement différents et dispose en particulier d'une fonction permettant de détecter l'arrivée d'impulsions lumineuses provenant d'un tir laser tout en réalisant simultanément une acquisition conventionnelle d'images d'une scène. La fonction de détection d'impulsions est ici assurée par un étage de détection d'impulsions connecté à la source d'un transistor de polarisation de la photodiode et communément appelé transistor « d'injection directe ». Comme le montre la Figure 4 de ce document brevet lors de la détection d'impulsions concomitante à l'acquisition conventionnelle de l'image, la polarisation est effectuée par une structure de polarisation de type BDI (« Buffered Direct Injection transistor d'injection directe ») avec un amplificateur couplé au transistor d'injection directe.

Un autre étage, dédié à l'acquisition passive d'images, est doté de moyens intégrateurs de courant sous forme d'un amplificateur et d'une capacité d'intégration qui récupère le courant à intégrer au niveau du drain du transistor d'injection directe.

Un tel dispositif nécessite un réglage précis de l'amplificateur de l'étage d'imagerie passive et peut avoir tendance à atténuer le signal de détection d'impulsions.

La structure de polarisation BDI est choisie pour apporter une polarisation plus stable de la photodiode malgré les variations de flux et donc de courant qui traverse le transistor d'injection directe. Cette meilleure stabilisation améliore les performances notamment en linéarité. Cette meilleure stabilisation est apportée par le biais de l'amplificateur dans la structure de polarisation qui permet de réduire l'impédance d'entrée de la structure. Toutefois, une réduction de l'impédance d'entrée entraine également une réduction de la sensibilité aux impulsions.

Le document US9871066B2 propose quant à lui un dispositif d'imagerie avec deux voies distinctes, une voie HF (« Haute Fréquence ») et une voie BF (« Basse Fréquence »), respectivement pour la réalisation d'une détection asynchrone d'impulsions lumineuse laser et la constitution simultanée d'une image.

Le signal de la voie « haute fréquence » est prélevé sur la grille du transistor dit « d'injection directe » d'un étage de polarisation de la photodiode. Un signal « basse fréquence » est ici prélevé sur le drain de ce même transistor.

Avec un tel dispositif, le maintien d'une bande passante importante peut avoir pour conséquence d'induire une consommation importante.

Pour ce dispositif une polarisation BDI est également mise en œuvre avec l'utilisation d'une contre réaction par l'intermédiaire d'un amplificateur. La bande passante de la boucle est conditionnée par la bande de détection que l'on souhaite pour la détection d'impulsions. Ceci peut amener à augmenter la consommation de la structure de polarisation.

La demande de brevet US 2019/0113605 A1 divulgue un pixel pour un capteur d'images avec un circuit de polarisation BDI et un détecteur d'impulsions connecté à la grille du transistor d'injection directe.

On cherche à mettre en œuvre un nouveau capteur d'image permettant d'effectuer concomitamment une capture d'image et une détection simultanée d'impulsions lumineuses et qui soit amélioré, en particulier vis-à-vis d'inconvénients énoncés ci-dessus.

On cherche de préférence à mettre en œuvre un capteur moins énergivore et le plus compact possible.

### EXPOSÉ DE L'INVENTION

Un objet de l'invention est donc la réalisation d'un dispositif imageur permettant la capture d'image passive par intégration d'un courant généré par une photodiode éclairée par une scène, tout en venant détecter l'arrivée d'impulsions laser très courtes par rapport au temps trame venant générer en sortie de la photodiode un pic ou une impulsion de courant de très faible durée, ce de préférence en minimisant le nombre de composants afin d'être compatible avec une intégration dans un pixel de taille réduite et limitant la consommation.

Selon un mode de réalisation la présente invention concerne un dispositif imageur comportant au moins un élément de détection formé d'un photo-détecteur associé et connecté à un circuit de lecture de signaux générés par le photo-détecteur, le circuit de lecture étant doté :
- d'un étage d'intégration muni d'une capacité d'intégration pour l'intégration de charges provenant du photo-détecteur,
- d'un étage de détection d'impulsions, pour détecter des impulsions de courant produites par le photo-détecteur consécutivement à la réception d'impulsions lumineuses,
- d'un étage de polarisation du photo-détecteur et muni d'un transistor d'injection directe couplé au photo-détecteur,
le circuit de lecture étant doté en outre d'un étage dit « intermédiaire » agencé d'une part entre l'étage de polarisation et entre d'autre part respectivement l'étage d'intégration et l'étage de détection d'impulsions, l'étage intermédiaire étant doté de transistors formant un miroir de courant doté d'une branche couplée à un drain du transistor d'injection directe et produisant sur une branche d'entrée de l'étage d'intégration un courant I_{B} image d'un courant donné I₀ délivré par le transistor d'injection directe, l'étage intermédiaire étant configuré pour convertir ledit courant donné I₀ en un potentiel V_{A} sur un nœud d'entrée dudit étage de détection d'impulsions, ledit nœud d'entrée étant agencé sur une électrode de grille ou à une électrode de source d'un transistor dudit étage intermédiaire.

Typiquement, le nœud d'entrée est connecté à une électrode de drain du transistor d'injection directe et à la grille d'un transistor dudit étage « intermédiaire ».

Le miroir de courant favorise une dissociation entre l'étage d'intégration et l'étage de détection d'impulsions, tout en limitant la consommation et l'encombrement et en maintenant une bande passante élevée.

Avantageusement, le photodétecteur est une photodiode, en particulier une photodiode qui fonctionne dans le domaine de l'infrarouge et transforme un rayonnement infrarouge en un courant électrique.

Selon une possibilité de mise en œuvre le nœud d'entrée est connecté à une électrode, en particulier une électrode de drain du transistor d'injection directe (142) et à la grille d'un transistor dudit étage « intermédiaire ».

Selon une possibilité de réalisation, le miroir de courant peut être formé :
- d'un premier transistor couplé ou connecté à ladite électrode du transistor d'injection directe, en particulier à l'électrode de drain dudit transistor d'injection directe, et,
- d'un deuxième transistor ayant une grille connectée à la grille du premier transistor, le deuxième transistor étant couplé ou connecté à la branche d'entrée de l'étage d'intégration.

Selon une mise en œuvre particulière, le nœud d'entrée de l'étage de détection d'impulsions est connecté à la grille d'un troisième transistor monté en cascode avec ledit deuxième transistor, le troisième transistor étant directement connecté à ladite branche d'entrée de l'étage d'intégration. Un tel transistor permet d'amplifier les signaux détectés. Le montage s'adapte ainsi tout particulièrement à la détection d'impulsions de faible amplitude.

En variante, le nœud d'entrée de l'étage de détection d'impulsions est connecté à la grille du deuxième transistor et du premier transistor, le premier transistor ayant sa grille et son drain connectés entre eux le deuxième transistor étant couplé ou connecté directement à la branche d'entrée de l'étage d'intégration.

La mise en œuvre d'un miroir de courant simple à deux transistors ou à deux transistors et un transistor en cascode permet de limiter les capacités parasites.

Avantageusement, l'étage de détection d'impulsions peut être doté :
- d'un bloc de détection d'impulsions de tension, configuré pour détecter un seuil de tension et émettre un signal de dépassement de ce seuil lorsque le seuil de tension est dépassé ;
- d'un bloc de filtrage en amont du bloc de détection de détection d'impulsions de tension.

Selon une possibilité de mise en œuvre, l'étage de polarisation peut être un étage de polarisation à injection directe contre-réactionnée et comprend un amplificateur dont la sortie est reliée à la grille du transistor d'injection directe.

Un tel mode de polarisation est particulièrement adapté à la détection d'impulsions lumineuses de faible intensité.

### BRÈVE DESCRIPTION DES DESSINS

La présente invention sera mieux comprise sur la base de la description qui va suivre et des dessins en annexe sur lesquels :
La figure 1 illustre, dans un imageur infrarouge, un exemple de pixel de lecture avec un étage d'intégration de courant et un étage de détection d'impulsions dissociés et couplés à un miroir de courant.
La figure 2 illustre blocs fonctionnels d'un étage de détection d'impulsions.
La figure 3 illustre un exemple de réalisation pour laquelle l'étage d'intégration est directement couplé à un miroir de courant comportant un nombre de transistors réduit.
La figure 4 illustre un autre exemple de réalisation pour laquelle l'étage de polarisation de type à injection directe à contre-réaction (BDI) est remplacé par un étage de polarisation de type à injection directe.
La figure 5 illustre une variante de réalisation du dispositif de la figure 3 pour laquelle l'étage de polarisation est de type à injection directe (DI).
La figure 6 illustre sert à illustrer une variante de réalisation du dispositif de la figure 1 pour laquelle la photodiode est de type N sur P.
La figure 7 illustre une variante de réalisation du dispositif de la figure 3 pour laquelle la photodiode est de type N sur P.
La figure 8 illustre une variante de réalisation dans lequel l'entrée de l'étage de détection d'impulsions est cette fois connectée à la source d'un transistor du miroir de courant.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

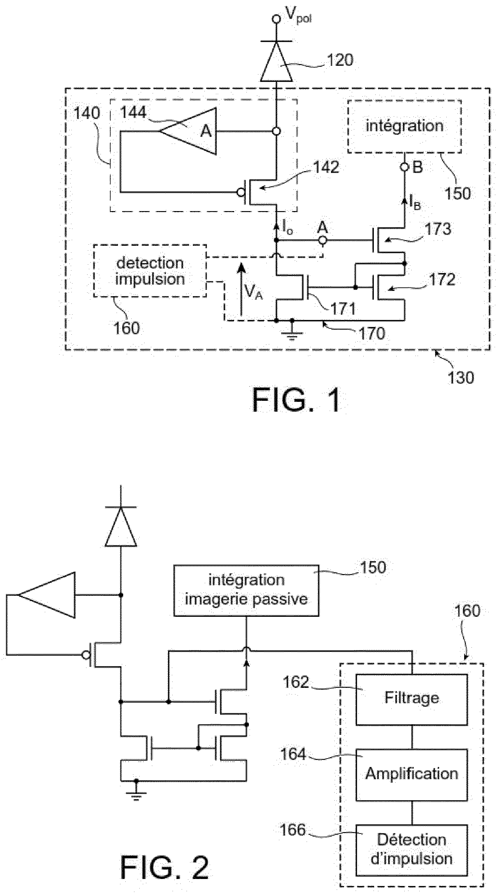

On se réfère à présent à la figure 1 donnant un exemple de réalisation particulier d'un circuit de lecture 130 d'un capteur d'image ou imageur tel que mis en œuvre suivant un mode de réalisation de la présente invention.

L'imageur est, dans cet exemple, un imageur infrarouge.

Le circuit de lecture 130, également appelé « pixel de lecture » ou « pixel », est connecté à un photo-détecteur tel qu'une photodiode 120. La photodiode 120 délivre au circuit de lecture un courant représentatif d'une scène observée et transforme un rayonnement lumineux, dans cet exemple un rayonnement IR, en un courant électrique. Le circuit de lecture 130 associé à la photodiode 120 forment un élément de détection. L'imageur compte généralement une pluralité d'éléments de détection typiquement agencés en matrice d'une ou plusieurs ligne(s) (également appelées rangée(s) horizontale(s)) et une ou plusieurs colonnes (également appelées rangée(s) verticale(s)).

Pour polariser la photodiode 120, on applique ici à une de ses bornes un potentiel de polarisation Vpol, tandis que l'autre borne est couplée au circuit de lecture 130.

Le circuit de lecture 130 sous forme d'un circuit à transistors est muni d'un étage 140 de polarisation de la photodiode 120. Cet étage 140 de polarisation comprend un transistor 142 de polarisation ou encore appelé « d'injection directe » connecté à la photodiode 120.

Dans l'exemple de réalisation particulier illustré sur la figure 1, l'étage 140 de polarisation est un étage de polarisation à injection directe contre-réactionnée également appelé BDI (pour « Buffer direct Injection ») de la photodiode 120 et est ainsi muni en outre d'un amplificateur 144 de gain A. Une entrée de l'amplificateur 144 est ici connectée à une électrode du transistor 142 du transistor d'injection directe, en particulier à sa source. Cette entrée est également connectée à la photodiode 120 tandis que la sortie de cet amplificateur 144 régit la tension de grille du transistor 142 d'injection directe. Une contre-réaction est ainsi établie sur un signal servant à polariser la photodiode 120. Le transistor d'injection directe 142, ici monté en cascode, permet de maintenir une polarisation fixe sur la photodiode 120 lors d'une phase d'intégration du courant de photodiode 120.

La polarisation de la photodiode 120 par l'intermédiaire d'un montage BDI permet de réduire l'impédance d'entrée vue par la photodiode 120 et ainsi d'augmenter la bande passante. Un tel montage est propice à la détection de pics de courant résultant d'impulsions lumineuses avec des fronts raides et une brève durée des pics.

La photodiode 120 reçoit un flux lumineux constant provenant de la scène observée et génère en conséquence un courant constant qui, lorsqu'il est intégré durant un certain temps d'intégration, donne une information relative d'éclairement moyen reçu par le pixel. Par exemple, pour des courants de photodiode 120 de l'ordre d'une dizaine de pico-ampère, le temps d'intégration peut être de l'ordre de la dizaine de milliseconde.

Pour faire une acquisition passive d'images d'une scène, le circuit de lecture 130 est ainsi doté d'un premier étage 150 de lecture encore appelé étage 150 « d'intégration » et typiquement doté d'au moins une capacité d'intégration (non représentée sur cette figure). La capacité d'intégration peut être par exemple prévue pour stocker de l'ordre d'une ou plusieurs centaines de milliers d'électrons.

L'étage d'intégration 150 est configuré pour intégrer sur la capacité d'intégration (non représentée) les charges délivrées par la photodiode 120 afin d'obtenir en fin de trame une information en tension reflétant le flux lumineux total reçu par la photodiode 120 pendant une durée d'intégration.

L'étage d'intégration 150 est avantageusement doté d'un moyen de réinitialisation de la capacité d'intégration, par exemple sous forme d'un transistor de réinitialisation dont la grille est commandée par un signal de réinitialisation et qui peut permettre de vider des charges emmagasinées par la capacité d'intégration. Outre la capacité d'intégration, l'étage d'intégration 150 peut, dans certains modes de réalisation, être également pourvu d'un transistor suiveur et d'un transistor de sélection de ligne. Selon une mise en œuvre optionnelle, l'étage d'intégration 150 peut être également pourvu d'un bloc de mémorisation en aval de la capacité d'intégration et qui sert à dupliquer une valeur de tension aux bornes de la capacité d'intégration une fois la période d'intégration écoulée. L'étage d'intégration 150 peut être alors doté d'une capacité de mémorisation et avantageusement d'un élément de réinitialisation pour permettre de vider les charges stockées par la capacité de mémorisation et remettre à zéro la valeur de tension mémorisée aux bornes de cette capacité.

L'étage 150 d'intégration reçoit ainsi un courant I_{B} sur une branche B d'entrée. Ce courant IB dépend d'un courant issu de la photodiode 120. Le dispositif a ici pour particularité d'avoir son étage 150 d'intégration qui n'est pas connecté directement à l'étage de polarisation 140 et en particulier au transistor d'injection directe 142. Ainsi, le courant I_{B} d'entrée de l'étage 150 d'intégration est prélevé sur une branche B de circuit qui n'est pas directement reliée à une des électrodes ou des bornes du transistor 142 d'injection directe.

Outre la capture passive d'images, l'imageur est ici configuré pour détecter sur au moins un ou plusieurs pixels, l'arrivée d'impulsions lumineuses.

Ainsi, une source lumineuse (non représentée), en particulier de type laser et associée au capteur d'image, peut être prévue pour générer un faisceau lumineux directif qui éclaire une zone précise d'une scène observée par le capteur. La source laser est éventuellement intégrée dans l'imageur ou bien peut être dissociée et indépendante de cet imageur. A titre d'exemple, le photo détecteur utilisé peut être une photodiode de type SWIR (pour « Short Wave Infra Red » ou infrarouge à onde courte) pour la détection d'impulsions laser à des longueurs d'ondes par exemple de l'ordre de 1,5 µm.

Le faisceau lumineux émis est typiquement pulsé de sorte que l'imageur est amené à détecter des impulsions lumineuses qui sont émises à une fréquence qui peut être constante ou fixe ou éventuellement variable suivant une séquence donnée et permettant de constituer un codage. Typiquement, la durée des impulsions lumineuses est très courte, par exemple de l'ordre de plusieurs dizaines de nanosecondes, et ces impulsions se traduisent en sortie de la photodiode 120 par des impulsions de courant de l'ordre de plusieurs dizaines de nano-ampères. La forme et la durée de ces impulsions de courant peuvent varier de manière importante en fonction notamment des milieux traversés par le rayonnement laser. Typiquement cela se traduit par plusieurs centaines ou milliers d'électrons collectés au niveau de la photodiode 120.

Dans la mesure où une quantité de charges produite par la photodiode 120 consécutivement à l'arrivée d'une impulsion laser est généralement très faible par rapport à une quantité de charges obtenue lors de l'acquisition d'image passive d'une scène la détection d'arrivée des impulsions n'est pas réalisée directement sur la capacité d'intégration de l'étage d'intégration 150. On prévoit ici un étage de détection spécifique pour détecter l'arrivée d'impulsions laser et qui est donc distinct de l'étage d'intégration 150. L'étage d'intégration 150 prélève sur sa branche d'entrée B un signal, tandis que l'étage de détection 160 prélève au nœud A d'entrée qui n'est pas situé sur la branche B et n'est pas directement connectée à cette branche B, un signal pouvant être traité indépendamment afin d'obtenir deux informations simultanées d'imagerie passive, et indication d'arrivée ou non d'impulsion laser d'autre part.

Le circuit de lecture 130 est ainsi également doté d'un deuxième étage de lecture encore appelé étage 160 de détection d'impulsions, dédié à la détection d'impulsions lumineuses. L'étage 160 de détection d'impulsions est ici directement connecté à l'étage de polarisation 140 et à une électrode du transistor d'injection directe 142, dans cet exemple à son drain.

Du fait des différences importantes d'intensités et de durées de variations respectives d'un signal asynchrone provenant de la source laser et d'un signal quasi-constant provenant de la scène, plutôt que d'utiliser la capacité d'intégration pour la détection d'impulsions, on utilise ici une impédance résistive afin de réaliser une conversion courant/tension en entrée de l'étage 160 de détection d'impulsions. L'intensité de courant maximale délivrée par la photodiode 120 étant faible, cette impédance résistive est de préférence prévue avec une valeur de résistance très importante et typiquement d'au moins plusieurs centaines de kOhm.

Le signal d'entrée de l'étage 160 de détection d'impulsions varie ici en fonction d'un potentiel V_{A} pris à un nœud A directement connecté au transistor 142 d'injection directe et qui est ici l'image du courant de drain de ce transistor 142.

L'étage 160 de détection d'impulsions comprend typiquement un bloc de détection d'impulsions 166, en particulier d'impulsions de tension. Ce bloc de détection d'impulsions 166 peut être configuré pour détecter si une tension dépasse ou non un seuil donné et pour générer consécutivement à ce dépassement un signal indicateur de dépassement. Le bloc de détection d'impulsions 166 peut être muni par exemple d'un comparateur et configuré pour produire un signal binaire indicateur, en fonction de son état haut ou bas de la détection ou non d'un dépassement de seuil.

L'étage 160 de détection d'impulsions est typiquement doté en amont du bloc 166 de détection d'impulsions d'un bloc 162 de filtrage, typiquement un bloc de filtrage passe haut ou un bloc de filtrage passe bande.

Le courant de photodiode généré par l'observation d'une scène varie peu sur toute la durée d'une trame mais peut varier fortement d'une trame à une autre en faisant par conséquent varier le potentiel V_{A} au nœud A en entrée de l'étage 160 de détection d'impulsions. Ces variations du potentiel V_{A} au nœud A qui ne sont pas dues à l'arrivée d'une impulsion de courant consécutive à la détection d'une impulsion laser sont donc filtrées par le bloc de filtrage 162.

Un mode de réalisation particulier illustré sur la figure 2 prévoit l'introduction d'un amplificateur 164 entre un bloc de filtrage 162, passe haut ou passe bande, et un bloc 166 de détection d'impulsions.

Pour permettre de favoriser une dissociation entre l'étage d'intégration 150 et l'étage 160 de détection d'impulsions, tout en limitant la consommation et l'encombrement et en maintenant une bande passante élevée, le circuit de lecture 130 a ici pour particularité d'être pourvu d'un étage 170 formant un miroir de courant.

Le miroir de courant est ici doté d'une branche connectée au transistor d'injection directe 142 pour prélever (ou transmettre) un courant donné I₀ en provenance (ou à destination) de ce transistor d'injection directe 142 et image du courant de la photodiode 120. Le miroir de courant 170 est doté d'une deuxième branche produisant un courant de sortie I_{B} copie, ou image, à un facteur K multiplicateur près (avec K qui peut être éventuellement différent de 1), du courant I₀.

En fonction du rapport des tailles respectives des transistors, 171, 172 du miroir de courant, le courant de sortie I_{B} peut être prévu identique au courant I₀ et à celui dans la photodiode 120 ou peut être supérieur au courant de photodiode 120 dans le miroir de courant. Dans ce dernier cas, où le rapport des tailles des transistors, 171, 172 est prévu pour réaliser un gain en courant, le dispositif est particulièrement adapté pour observer des scènes générant un faible flux lumineux.

L'étage 160 de détection d'impulsions est relié à la première branche du miroir de courant et ici directement au transistor d'injection directe 142. L'étage 150 intégrateur est quant à lui relié à la deuxième branche du miroir de courant.

Le miroir de courant est ici formé d'un premier transistor 171, en particulier un NMOS, dont la source est ici connectée au drain du transistor à injection directe 142 ainsi qu'à l'entrée de l'étage 160 de détection d'impulsions. Le miroir de courant comporte un deuxième transistor 172, en particulier de type NMOS, dont la grille et la source sont reliées entre eux et à la grille du premier transistor 171.

Dans l'exemple de réalisation particulier de la figure 1, la deuxième branche 172 du miroir 170 comprend ou est associée ici à un transistor 173 monté en cascode et auquel l'étage d'intégration 150 est directement relié. L'étage de détection d'impulsions 160 est quant à lui connecté à la grille de ce transistor 173, ce qui permet d'avoir une impédance résistive importante en entrée de l'étage 160 de détection d'impulsions 160, et ainsi de plus fortes variations de tension lors de l'arrivée d'impulsions laser.

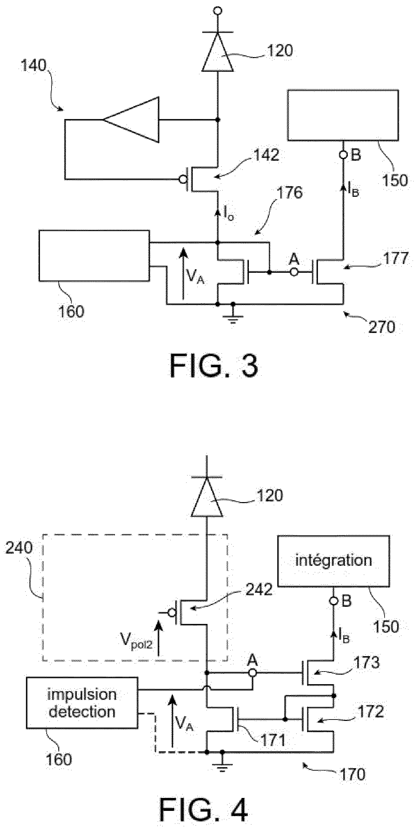

Une variante de réalisation plus compacte est donnée sur la figure 3 et prévoit cette fois de remplacer l'étage 170 par un miroir 170' de courant simple dont le premier transistor 176 directement connecté au transistor d'injection directe 142, par exemple NMOS, a sa grille et sa source qui sont reliées entre elles et au nœud A d'entrée de l'étage 160 détecteur d'impulsions.

La deuxième branche du miroir n'est ici formée que d'un seul transistor 177, par exemple NMOS, dont la grille est reliée au nœud A et dont la source est directement connectée à la branche B d'entrée de l'étage 150 d'intégration. Cet étage 150 d'intégration prélève ainsi un courant I_{B} à la source du transistor 177 qui est l'image à un coefficient près, non-nul éventuellement égal à 1, du courant I0 de drain du transistor d'injection directe 142, lui-même image ou égale au courant de photodiode 120.

Le gain obtenu pour la conversion courant / tension est ici plus faible que dans l'exemple de réalisation décrit précédemment. La configuration décrite précédemment en lien avec la figure 3 est ainsi meilleure pour détecter des impulsions laser d'intensité plus faible, par exemple lorsque la source d'impulsions laser est éloigné ou que le milieu traversé par le laser est plus atténuant.

Une autre variante de réalisation illustrée sur la figure 4 prévoit cette fois de remplacer l'étage de polarisation de type BDI par un étage 240 formé ici uniquement d'un transistor 245 d'injection directe dont l'agencement diffère de celui décrit précédemment de par celui de sa grille mise à un potentiel de polarisation Vpol2.

Une telle variante sans amplificateur permet de réduire la consommation et la surface occupée dans le pixel, mais s'avère moins performante pour la détection d'impulsions laser de très courte durée.

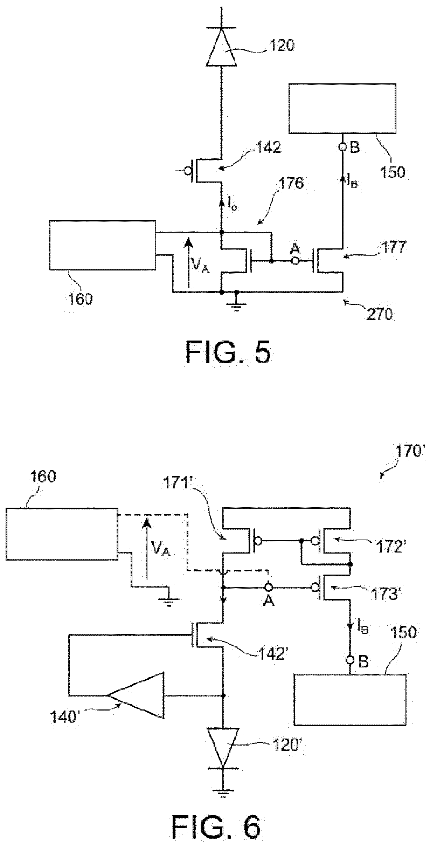

Un tel mode de polarisation, s'adapte également, comme cela est illustré sur la figure 5, à une structure de miroir telle que décrite précédemment et formée uniquement de deux transistors 176, 177.

Dans les exemples de réalisation illustrés, la photodiode 120 est typiquement de type P sur N et polarisée en inverse. Dans ce cas, on prévoit typiquement le transistor d'injection directe 142 de type PMOS.

Un dispositif tel que décrit précédemment s'adapte également à une photodiode 120' de type N sur P.

La photodiode 120', a ici sa borne de cathode à un potentiel de polarisation qui peut être un potentiel de polarisation bas, par exemple à la masse GND tandis que son borne d'anode est connectée au circuit de lecture.

Ainsi, dans l'exemple de réalisation illustré sur la figure 6, l'étage de polarisation 140' est doté d'un transistor d'injection directe 142' de type PMOS.

De même, les transistors 171', 172' formant le miroir de courant et le transistor 173' monté en cascode sont cette fois de type PMOS.

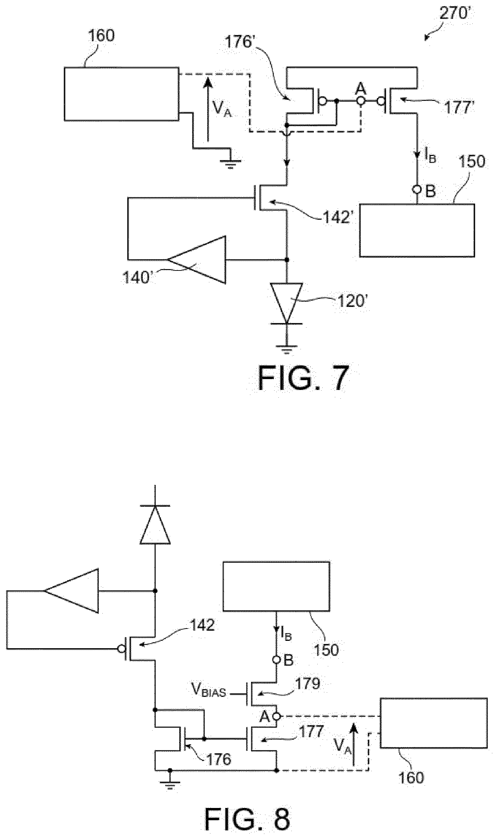

L'exemple de réalisation illustré sur la figure 7 est une variante du dispositif de la figure 3, avec cette fois des transistors 176', 177' formant le miroir de courant de type PMOS et le transistor 142' d'injection directe de type NMOS.

L'utilisation de la photodiode 120' de type N sur P s'adapte également à une polarisation de type DI comme cela a été décrit précédemment en lien avec les figures 4 et 5, avec cette fois des transistors formant le miroir de courant de type PMOS et le transistor d'injection directe de type NMOS.

Dans l'un ou l'autre des exemples décrits précédemment, le nœud A d'entrée de l'étage 160 de détection d'impulsion est agencé sur une électrode de grille d'un transistor de l'étage 170.

On a ainsi une impédance d'entrée pour l'étage 160 de détection d'impulsions qui dépend du rapport 1/gm, avec gm la transconductance d'un transistor 173, 177 typiquement en régime de faible inversion. Ce rapport étant typiquement élevé, on obtient ainsi un gain important pour la conversion courant/tension.

Dans une variante de réalisation illustrée sur la figure 8, les transistors 176, 177 forment un miroir de courant et le point A d'entrée de l'étage 160 de détection d'impulsions est cette fois pris sur la source d'un transistor 179 monté en cascode et dont le drain est relié à l'entrée de l'étage 150 d'intégration. Cette variante s'adapte de préférence à des transistors, 176, 177 du miroir de courant de tailles identiques et permet alors également d'obtenir un gain en 1/gm important.

## Revendications

1. Dispositif imageur comportant au moins un élément de détection formé d'un photo-détecteur (120, 120') associé et connecté à un circuit de lecture (130) de signaux générés par le photo-détecteur (120, 120'), le circuit de lecture (130) étant doté :
- d'un étage (150) d'intégration muni d'une capacité d'intégration pour l'intégration de charges provenant du photo-détecteur (120, 120'),
- d'un étage (160) de détection d'impulsions, pour détecter des impulsions de courant produites par le photo-détecteur (120, 120') consécutivement à la réception d'impulsions lumineuses,
- d'un étage de polarisation (140, 140', 240) du photo-détecteur (120, 120') et muni d'un transistor (142, 242, 142') d'injection directe couplé au photo-détecteur,
le circuit de lecture (130) étant doté en outre d'un étage (170, 270, 170', 270') dit « intermédiaire » agencé d'une part entre l'étage de polarisation (140) et entre d'autre part respectivement l'étage (150) d'intégration et l'étage (160) de détection d'impulsions, l'étage intermédiaire étant doté de transistors (171, 172 ; 176, 177 ; 171', 172' ; 176', 177') formant un miroir de courant doté d'une branche couplée à un drain du transistor d'injection directe et produisant sur une branche d'entrée (B) de l'étage d'intégration (150) un courant (I_{B}) image d'un courant donné délivré par le transistor d'injection directe (142), l'étage intermédiaire étant configuré pour convertir ledit courant donné en un potentiel (V_{A}) sur un nœud (A) d'entrée dudit étage (160) de détection d'impulsions, ledit nœud (A) d'entrée étant agencé sur une électrode de grille ou à une électrode de source d'un transistor (171, 177, 179) dudit étage intermédiaire.

2. Dispositif selon la revendication 1, dans lequel ledit nœud (A) d'entrée (A) est connecté à une électrode de drain du transistor d'injection directe (142) et à la grille d'un transistor (171, 177) dudit étage (170, 170') « intermédiaire ».

3. Dispositif selon l'une des revendications 1 ou 2, dans lequel le miroir de courant est formé :
- d'un premier transistor (171, 176, 171', 176') couplé ou connecté à ladite électrode dudit transistor (142) d'injection directe, en particulier à l'électrode de drain dudit transistor (142) d'injection directe, et,
d'un deuxième transistor (172, 177, 172', 177'), ledit deuxième transistor ayant une grille connectée à la grille du premier transistor, ledit deuxième transistor étant couplé ou connecté à ladite branche d'entrée (B) de l'étage d'intégration (150).

4. Dispositif selon la revendication 3 lorsque rattachée à la revendication 2, dans lequel ledit nœud (A) d'entrée de l'étage (160) de détection d'impulsions est connecté à la grille d'un troisième transistor (173, 173') monté en cascode avec ledit deuxième transistor (172, 172'), ledit troisième transistor (173, 173') étant directement connecté à ladite branche d'entrée (B) de l'étage d'intégration (150).

5. Dispositif selon la revendication 3 lorsque rattachée à la revendication 2, dans lequel ledit nœud (A) d'entrée est connecté à la grille du deuxième transistor (177, 177') et du premier transistor (176, 176'), le premier transistor (176, 176') ayant sa grille et son drain connectés entre eux ledit deuxième transistor (177, 177') étant couplé ou connecté directement à ladite branche d'entrée (B) de l'étage d'intégration (150).

6. Dispositif selon l'une des revendications 1 à 5, dans lequel l'étage (160) de détection d'impulsions est muni :
- d'un bloc (166) de détection d'impulsions de tension, configuré pour détecter un seuil de tension et émettre un signal de dépassement de ce seuil lorsque le seuil de tension est dépassé ;
- d'un bloc de filtrage (162) en amont du bloc (166) de détection de détection d'impulsions de tension.

7. Dispositif selon l'une des revendications 1 à 6, dans lequel l'étage de polarisation est un étage de polarisation à injection directe contre-réactionnée et comprend un amplificateur (144) dont la sortie est reliée à la grille du transistor (142) d'injection directe.

8. Dispositif imageur selon l'une des revendications 1 à 7, dans lequel le photo-détecteur fonctionne dans le domaine infrarouge et dans lequel lesdites impulsions lumineuses sont issues d'une source laser intégrée au dispositif imageur.

## Patentansprüche

1. Bildgebende Vorrichtung, die mindestens ein Erfassungselement aufweist, das aus einem Fotodetektor (120, 120') besteht, der mit einer Leseschaltung (130) für von dem Fotodetektor (120, 120') erzeugte Signale assoziert und verbunden ist, wobei die Leseschaltung (130) mit Folgendem versehen ist:
- einer Integrationsstufe (150), ausgestattet mit einer Integrationsfähigkeit für die Integration von Lasten aus dem Fotodetektor (120, 120'),
- einer Impulserfassungsstufe (160), um Stromimpulse zu erfassen, die von dem Fotodetektor (120, 120') infolge des Empfangs von Lichtimpulsen erzeugt werden,
- einer Polarisationsstufe (140, 140', 240) des Fotodetektors (120, 120'), die mit einem Transistor (142, 242, 142') mit Direkteinspeisung ausgestattet ist, der mit dem Fotodetektor gekoppelt ist,
wobei die Leseschaltung (130) ferner mit einer "Zwischenstufe" (170, 270, 170', 270') versehen ist, die einerseits zwischen der Polarisationsstufe (140) und andererseits zwischen der Integrationsstufe (150) beziehungsweise der Impulserfassungsstufe (160) angeordnet ist, wobei die Zwischenstufe mit Transistoren (171, 172; 176, 177; 171', 172'; 176', 177') versehen ist, die einen Stromspiegel bilden, der mit einem Zweig versehen ist, der mit einem Drain des Transistors mit Direkteinspeisung gekoppelt ist und an einem Eingangszweig (B) der Integrationsstufe (150) einen Strom (I_{B}) erzeugt, der ein Bild eines von dem Transistor mit Direkteinspeisung (142) abgegebenen Stroms ist, wobei die Zwischenstufe so konfiguriert ist, dass sie den Strom in ein Potenzial (V_{A}) an einem Eingangsknoten (A) der Impulserfassungsstufe (160) umwandelt, wobei der Eingangsknoten (A) an einer Gitterelektrode oder an einer Quellelektrode eines Transistors (171, 177, 179) der Zwischenstufe angeordnet ist.

2. Vorrichtung nach Anspruch 1, wobei der Eingangsknoten (A) mit einer Drainelektrode des Transistors mit Direkteinspeisung (142) und mit dem Gitter eines Transistors (171, 177) der "Zwischenstufe" (170, 170') verbunden ist.

3. Vorrichtung nach einem der Ansprüche 1 oder 2, wobei der Stromspiegel aus Folgendem gebildet ist:
- einem ersten Transistor (171, 176, 171', 176'), der mit der Elektrode des Transistors mit Direkteinspeisung (142) gekoppelt oder verbunden ist, insbesondere mit der Drainelektrode des Transistors mit Direkteinspeisung (142), und,
einem zweiten Transistor (172, 177, 172', 177'), wobei der zweite Transistor ein Gitter hat, das mit dem Gitter des ersten Transistors verbunden ist, wobei der zweite Transistor mit dem Eingangszweig (B) der Integrationsstufe (150) gekoppelt oder verbunden ist.

4. Vorrichtung nach Anspruch 3, wenn sie mit Anspruch 2 verknüpft ist, wobei der Eingangsknoten (A) der Impulserfassungsstufe (160) mit dem Gitter eines dritten Transistors (173, 173') verbunden ist, der in einer Kaskode mit dem zweiten Transistor (172, 172') montiert ist, wobei der dritte Transistor (173, 173') direkt mit dem Eingangszweig (B) der Integrationsstufe (150) verbunden ist.

5. Vorrichtung nach Anspruch 3, wenn sie mit Anspruch 2 verknüpft ist, wobei der Eingangsknoten (A) mit dem Gitter des zweiten Transistors (177, 177') und des ersten Transistors (176, 176') verbunden ist, wobei das Gitter und der Drain des ersten Transistors (176, 176') miteinander verbunden sind und der zweite Transistor (177, 177') direkt mit dem Eingangszweig (B) der Integrationsstufe (150) gekoppelt oder verbunden ist.

6. Vorrichtung nach einem der Ansprüche 1 bis 5, wobei die Impulserfassungsstufe (160) mit Folgendem ausgestattet ist:
- einem Block (166) zur Erfassung von Spannungsimpulsen, der so konfiguriert ist, dass er eine Spannungsschwelle erfasst und ein Signal zum Überschreiten dieser Schwelle ausgibt, wenn die Spannungsschwelle überschritten wird;
- einen Filterblock (162) vor dem Block (166) zur Erfassung von Spannungsimpulsen.

7. Vorrichtung nach einem der Ansprüche 1 bis 6, wobei die Polarisationsstufe eine rückgekoppelte Polarisationsstufe mit Direkteinspeisung ist und einen Verstärker (144) umfasst, dessen Ausgang mit dem Gitter des Transistors mit Direkteinspeisung (142) verbunden ist.

8. Bildgebungsvorrichtung nach einem der Ansprüche 1 bis 7, wobei der Fotodetektor im Infrarotbereich arbeitet und wobei die Lichtimpulse von einer in die Bildgebungsvorrichtung integrierten Laserquelle stammen.

## Claims

1. Imaging device including at least one detection element formed of a photodetector (120, 120') associated with and connected to a circuit (130) for reading signals generated by the photodetector (120, 120'), the readout circuit (130) being provided with:
- an integration stage (150) equipped with an integration capacitor for integrating charges coming from the photodetector (120, 120'),
- a pulse detection stage (160), for detecting current pulses produced by the photodetector (120, 120') following the receipt of light pulses,
- a bias stage (140, 140', 240) of the photodetector (120, 120') and equipped with a direct injection transistor (142, 242, 142') coupled to the photodetector,
the readout circuit (130) further being provided with a so-called "intermediate" stage (170, 270, 170', 270') arranged on the one hand between the bias stage (140) and between on the other hand respectively the integration stage (150) and the pulse detection stage (160), the intermediate stage being provided with transistors (171, 172; 176, 177; 171', 172'; 176', 177') forming a current mirror provided with a branch coupled to a drain of the direct injection transistor and producing on an input branch (B) of the integration stage (150) a current (I_{B}) that is the image of a given current delivered by the direct injection transistor (142), the intermediate stage being configured to convert said given current into a potential (V_{A}) on an input node (A) of said pulse detection stage (160), said input node (A) being arranged on a gate electrode or at a source electrode of a transistor (171, 177, 179) of said intermediate stage.

2. Device according to claim 1, wherein said input (A) node (A) is connected to a drain electrode of the direct injection transistor (142) and to the gate of a transistor (171, 177) of said "intermediate" stage (170, 170').

3. Device according to one of claims 1 or 2, wherein the current mirror is formed of:
- a first transistor (171, 176, 171', 176') coupled or connected to said electrode of said direct injection transistor (142), in particular to the drain electrode of said direct injection transistor (142), and,
a second transistor (172, 177, 172', 177'), said second transistor having a gate connected to the gate of the first transistor, said second transistor being coupled or connected to said input branch (B) of the integration stage (150).

4. Device according to claim 3 when related to claim 2, wherein said input node (A) of the pulse detection stage (160) is connected to the gate of a third transistor (173, 173') mounted in cascode with said second transistor (172, 172'), said third transistor (173, 173') being directly connected to said input branch (B) of the integration stage (150).

5. Device according to claim 3 when related to claim 2, wherein said input node (A) is connected to the gate of the second transistor (177, 177') and of the first transistor (176, 176'), the first transistor (176, 176') having its gate and its drain connected together, said second (177, 177') being directly coupled or connected to said input branch (B) of the integration stage (150).

6. Device according to one of claims 1 to 5, wherein the pulse detection stage (160) is equipped with:
- a voltage pulse detection block (166), configured to detect a voltage threshold and emit a signal indicating the exceedance of this threshold when the voltage signal is exceeded;
- a filtering block (162) upstream of the voltage pulse detection block (166).

7. Device according to one of claims 1 to 6, wherein the bias stage is a feedback direct injection bias stage and comprises an amplifier (144) the output of which is connected to the gate of the direct injection transistor (142).

8. Imager device according to one of claims 1 to 7, wherein the photodetector operates in the infrared range and wherein said light pulses are from a laser source integrated into the imager device.
